# EUROPEAN PATENT APPLICATION

(11) **EP 4 017 016 A1**
(43) Date of publication of application: **22.06.2022**
(21) Application number: 20860918.0
(22) Date of filing: 18.08.2020
(51) Int. Cl.: H04N 21/458, H04N 21/45, H04N 21/858, H04N 21/845, H04N 21/81, G06Q 30/02

(54) **DEVICE FOR PROVIDING PERSONALIZED ADVERTISEMENT**

(30) Priority: 02.09.2019 KR 20190107901
(71) Applicant: Anypoint Media Co., Ltd., Seoul (KR)
(72) Inventor: BAEK, Wonjang, Seongnam-si Gyeonggi-do 13523 (KR); LEE, Doohwan, Seoul 07283 (KR)
(74) Representative: BCKIP
(86) International application number: PCT/KR2020/010939
(87) International publication number: WO 2021/045407

(57) **Abstract**

There is provided a device for providing personalized advertisements, the device including: a communicator; a personalized playlist processor configured to perform: (a) receiving a playlist of content from a system for providing the content through streaming; and (b) generating a personalized playlist including a uniform resource identifier (URI) of personalized advertising content based on the playlist; a content processor configured to receive the content and the personalized advertising content through the communicator using the personalized playlist, perform signal processing on the content and the personalized advertising content, and provide the content and the personalized advertising content; and a controller configured to control operations of the communicator, the personalized playlist processor, and the content processor.

## Description

### [Technical Field]

The present disclosure relates to a device for providing personalized advertisement.

### [Related Art]

Services for providing content through streaming, for example, over-the-top (OTT) services, are being launched. Korean Patent Application Publication No. 10-2015-0080278 (patent document 1), titled "Apparatus and method for providing advertising content and video content," which was filed by KT Corporation and published on July 9, 2015, Korean Patent Application Publication No. 10-2017-0020745 (patent document 2), titled "Reception apparatus, reception method, transmission apparatus, and transmission method," which was filed by SONY Corporation and published on February 24, 2017, and Korean Patent Application Publication No. 10-2017-0020745 (patent document 3), titled "Method of controlling communication terminal for receiving multimedia chunk and recording medium on which program for executing the same is recorded," which was filed by LG Uplus Corporation and registered on September 18, 2015, disclose services for providing content through streaming.

More specifically, technologies such as hypertext transfer protocol (HTTP) live streaming (HLS) and Moving Picture Experts Group - Dynamic Adaptive Streaming over HTTP (MPEG-DASH) are used in providing content through streaming.

A detailed description of a method of providing content through streaming is as follows. A system for providing content through streaming splits, for example, content into a plurality of chunk files, generates a playlist including content identification information, such as a uniform resource identifier (URI), of each of the plurality of chunk files, and then transmits the playlist to a user terminal. After receiving the playlist, the user terminal receives the content on the basis of the content identification information, such as the URI, of each of the plurality of chunk files included in the playlist, performs signal processing on the content, and provides the content. In this specification, a user terminal indicates a computing device, such as a receiver, a personal computing device, a set-top box, or a mobile communication terminal, that receives content, performs signal processing on the content, and provides the content.

To provide advertising content, a marker, such as Society of Cable Telecommunications Engineers (SCTE)-35, may be used. SCTE-35 is a standard that represents a technology used for inserting advertising or replacement content into content. The system for providing content through streaming may insert advertising content or replacement content within a time (hereinafter, also referred to as a "replaceable content provision time") identified by a marker (referred to as a "digital queue tone signal" or "digital queue"). Advertising content and replacement content will be collectively referred to as "replaceable content" below.

During the replaceable content provision time, replaceable content is inserted according to a predesignated policy. For example, the system for providing content through streaming may generate a playlist by inserting the URI of each of a plurality of chunk files and the URI of replaceable content according to a predesignated advertising schedule, and the user terminal may receive the playlist and provide the content and the replaceable content.

Meanwhile, to provide a personalized advertisement suited to each user terminal as replaceable content, the system for providing content through streaming should separately generate a playlist of each user terminal. For example, in the system for providing content through streaming, a server for processing personalized advertisements generates and transmits a first playlist, which includes content and the URI of personalized advertising content suited to a first user terminal, to the first user terminal and generates and transmits a second playlist, which includes content and the URI of personalized advertising content suited to a second user terminal, to the second user terminal. The first user terminal receives the first playlist, performs signal processing on the first playlist, and provides the content and the personalized advertising content suited to the first user terminal. The second user terminal receives the second playlist, performs signal processing on the second playlist, and provides the content and the personalized advertising content suited to the second user terminal.

Therefore, to provide personalized advertisements to user terminals, the load of the system for providing content through streaming increases. An additional device, for example, a server for processing personalized advertisements, is necessary. Also, to provide personalized advertisements to user terminals, when the number of user terminals that access the system for providing content through streaming increases, the number of servers that process personalized advertisement in the system for providing content through streaming should increase accordingly. For example, when one server which processes personalized advertisements can provide personalized advertisements to 10,000 user terminals, 10 servers which process personalized advertisements are required for providing personalized advertisements to 100,000 user terminals.

### [Related Art Documents]

### [Patent Documents]

1. Korean Patent Application Publication No. 10-2015-0080278
2. Korean Patent Application Publication No. 10-2017-0020745
3. Korean Patent Publication No. 10-1555792

### [Disclosure]

### [Technical Problem]

The present disclosure is directed to providing a personalized advertisement provision device capable of providing personalized advertisements to users while minimizing the load of a system for providing content through real-time streaming.

### [Technical Solution]

One aspect of the present disclosure provides a device for providing personalized advertisements, the device including: a communicator; personalized playlist processor configured to perform: (a) receiving a playlist of content from a system for providing the content through streaming; and (b) generating a personalized playlist including a uniform resource identifier (URI) of personalized advertising content based on the playlist; a content processor configured to receive the content and the personalized advertising content through the communicator using the personalized playlist, perform signal processing on the content and the personalized advertising content, and provide the content and the personalized advertising content; and a controller configured to control operations of the communicator, the personalized playlist processor, and the content processor.

### [Advantageous Effects]

According to the technology described in the present disclosure, a device (i.e., a user terminal) that provides personalized advertisements while minimizing the load of a system that provides content through real-time streaming can provide a personalized advertisement to a user. Also, even when a system that provides content through streaming includes a server for processing personalized advertisements, a user terminal can dynamically change a playlist according to the load of the server for processing personalized advertisements. Accordingly, the user terminal can efficiently provide a personalized advertisement to a user even while minimizing the load of the system for providing content through streaming. In addition, even in a real-time content streaming service, such as an existing over-the-top (OTT) service, a user terminal can provide a personalized advertisement to a user according to the present embodiment simply by changing a uniform resource identifier (URI) of a playlist for an internal URI of a personalized playlist without changing an existing element installed on the user terminal, for example, an element for processing content, such as a media player.

### [Description of Drawings]

FIG. 1 is a diagram illustrating an exemplary configuration of a device for providing personalized advertisements according to an embodiment of a technology described in the present disclosure.
FIG. 2 is a diagram exemplifying a system environment including a device for providing personalized advertisements according to the embodiment.
FIG. 3 is a diagram exemplifying a process performed by a personalized playlist processor of the device for providing personalized advertisements according to the present embodiment.
FIG. 4 is a diagram schematically illustrating an example in which the personalized playlist processor generates a personalized playlist on the basis of a playlist.
FIG. 5 is a diagram exemplifying a process that the personalized playlist processor of the device for providing personalized advertisements according to the embodiment performs to acquire a uniform resource identifier (URI) of personalized advertising content.
FIG. 6 is a diagram exemplifying a process in which the personalized playlist processor of the device for providing personalized advertisements according to the embodiment generates an internal URI of a personalized playlist.
FIG. 7 is a diagram schematically illustrating an example in which a calculation processor of the device for providing personalized advertisements according to the embodiment generates an internal URI of a personalized playlist.

### [Best Mode of the Invention]

Hereinafter, embodiments of a device for providing personalized advertisements according to a technology set forth in the present disclosure will be described in further detail with reference to the accompanying drawings. In the drawings for describing embodiments of the technology described in the present disclosure, for convenience of description, only some of actual elements may be shown, or some may be omitted, modified, or shown in a different scale.

### <Embodiments>

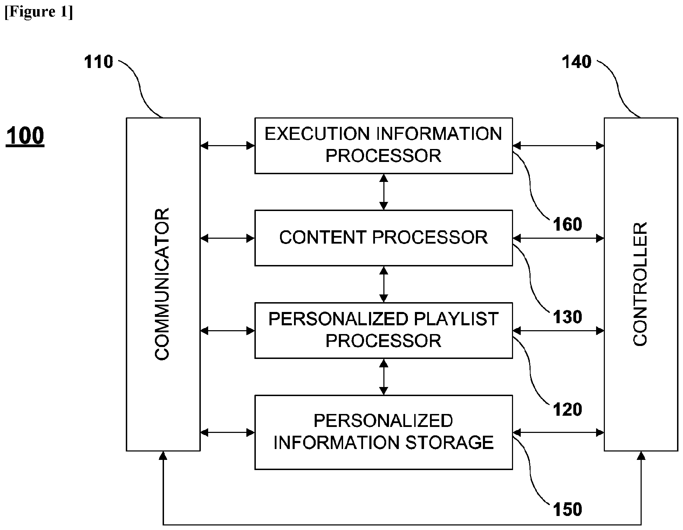

FIG. 1 is a diagram illustrating an exemplary configuration of a device for providing personalized advertisements according to an embodiment of a technology described in the present disclosure.

Referring to FIG. 1, a device 100 for providing personalized advertisements includes a communicator 110, a personalized playlist processor 120, a content processor 130, and a controller 140. Also, referring to FIG. 1, the device 100 for providing personalized advertisements may additionally include at least one of a personalized information storage 150 or an execution information processor 160.

The device 100 for providing personalized advertisements according to the present embodiment may be implemented using a computing device, such as a receiver, a personal computing device, a set-top box, or a mobile communication terminal, that receives content, performs signal processing on the content, and provides the content. In the present specification, the device 100 for providing personalized advertisements is also referred to as a "user terminal 100" below.

The communicator 110 is a communication interface between the user terminal 100 and a system 200, which will be described below, for providing content through streaming and a server 300, which will be described below, for providing advertising content. The communicator 110 may be implemented using a semiconductor chip that performs wired or wireless communication. In the present specification, the system 200 for providing content through streaming is also referred to as a "system 200," and the server 300 for providing advertising content is also referred to as a "server 300."

The personalized playlist processor 120 generates a personalized playlist. A detailed configuration of the personalized playlist processor 120 will be described below.

The content processor 130 receives content and personalized advertising content through the communicator 110 using the personalized playlist generated by the personalized playlist processor 120, performs signal processing on the content and the personalized advertising content, and provides the content and the personalized advertising content. More specifically, the content processor 130 receives the content and the personalized advertising content through the communicator 110 using the personalized playlist, performs signal processing on the content and the personalized advertising content, and provides the content and the personalized advertising content through, for example, a display (not shown) and a speaker (not shown) of the user terminal 100.

The controller 140 controls operations of the communicator 110, the personalized playlist processor 120, and the content processor 130. A detailed configuration of the controller 140 will be described below.

The personalized playlist processor 120, the content processor 130, and the controller 140 may be implemented using a semiconductor device, such as a central processing unit (CPU). The personalized playlist processor 120, the content processor 130, and the controller 140 may be implemented using the same CPU. In other words, the same CPU may operate as the personalized playlist processor 120, operate as the content processor 130, and operate as the controller 140. Alternatively, for example, the content processor 130 may be implemented using a semiconductor device, such as an additional signal processing chip, rather than the CPU.

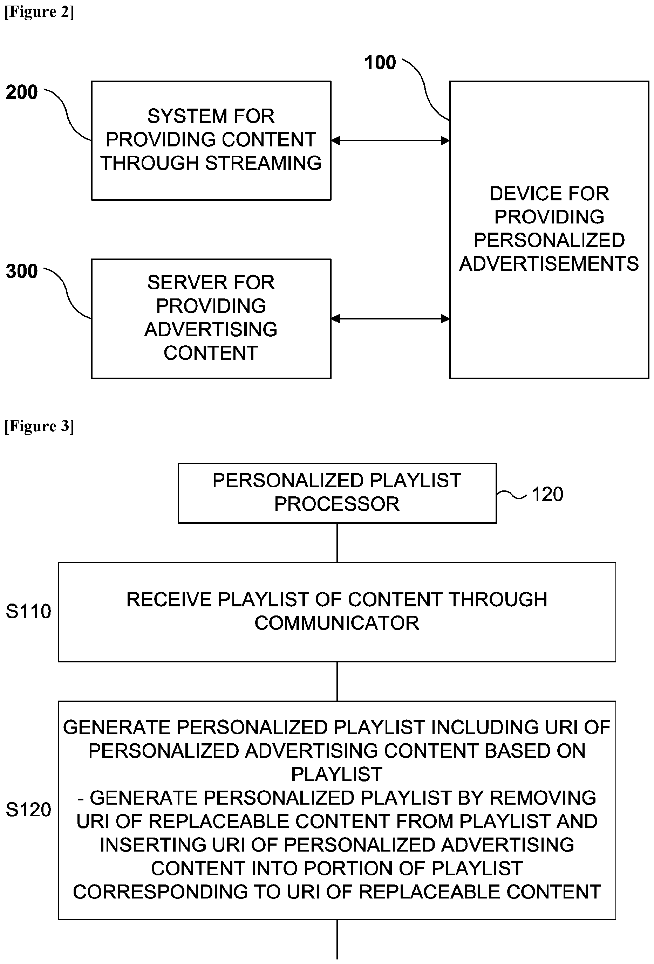

FIG. 2 is a diagram exemplifying a system environment including the device 100 for providing personalized advertisements according to the present embodiment.

Referring to FIG. 2, the system environment includes the device 100 for providing personalized advertisements, the system 200 for providing content through streaming, and the server 300 for providing advertising content.

The system 200 is a system configured to provide content through streaming. For example, the system 200 may provide content through real-time streaming according to either one of the hypertext transfer protocol (HTTP) live streaming (HLS) standard and the Moving Picture Experts Group - Dynamic Adaptive Streaming over HTTP (MPEG-DASH) standard. The real-time streaming content may be real-time content, such as a sports game. According to the present embodiment, even in the case of real-time streaming content, a personalized advertisement may be provided. For example, as will be described below, the personalized playlist processor 120 may generate a personalized playlist according to control of the controller 140, and the content processor 130 may receive content and personalized advertising content through the communicator 110 using the personalized playlist, perform signal processing on the content and the personalized advertising content, and provide the content and the personalized advertising content.

A configuration of the personalized playlist processor 120 will be described in further detail below.

FIG. 3 is a diagram exemplifying a process performed by a personalized playlist processor of the device for providing personalized advertisements according to the present embodiment.

Referring to FIG. 3, the personalized playlist processor 120 performs a process S110 of receiving a playlist of content from the system 200 through the communicator 110 and a process S120 of generating a personalized playlist including a URI of personalized advertising content on the basis of the playlist received through the process S110.

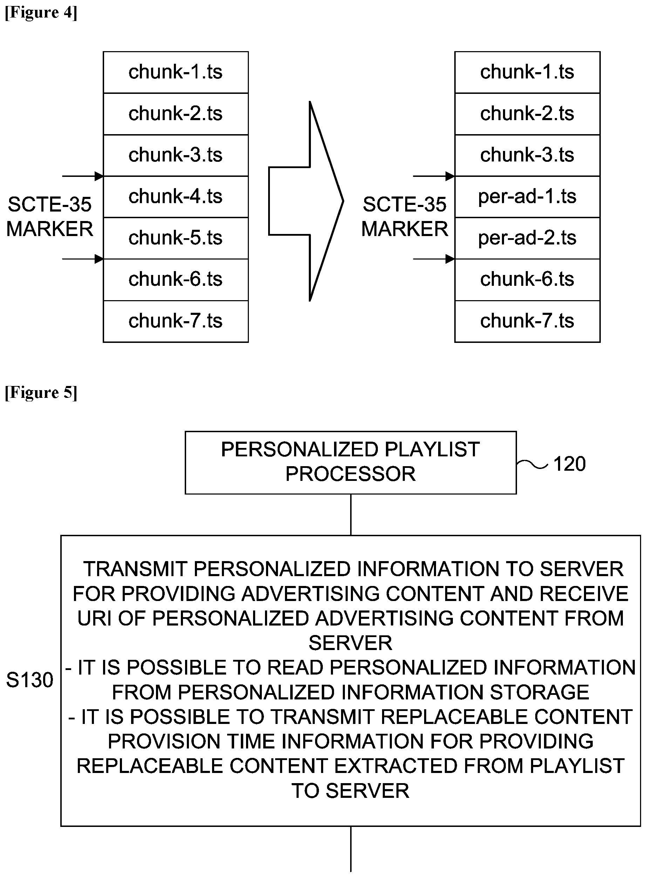

FIG. 4 is a diagram schematically illustrating an example in which the personalized playlist processor generates a personalized playlist on the basis of a playlist.

A playlist and a personalized playlist of FIG. 4 are shown in a simplified manner but may actually be implemented in a URI format according to a standard such as the HLS standard or the MPEG-DASH standard. In other words, although shown in a simplified manner for convenience of description, chunk-1.ts to chunk-7.ts shown in FIG. 4 represent, for example, URIs in or outside the system 200 where each file is stored. As an example, chunk-1.ts to chunk-3.ts, chunk-6.ts, and chunk-7.ts may be stored in the system 200, and chunk-4.ts and chunk-5.ts may be stored outside the system 200, such as in the server 300. Further, per-ad-1.ts and per-ad-2.ts represent, for example, URIs (e.g., in the server 300), in which each file is stored, outside the system 200.

Referring to FIG. 4, a playlist represents providing content through streaming in order of chunk-1.ts, chunk-2.ts, chunk-3.ts, chunk-4.ts, chunk-5.ts, chunk-6.ts, and chunk-7.ts. The playlist includes URIs of necessary content and URIs of replaceable content. For example, chunk-1.ts, chunk-2.ts, chunk-3.ts, chunk-6.ts, and chunk-7.ts represent URIs of necessary content, and chunk-4.ts and chunk-5.ts represent URIs of replaceable content. The process S120 may include a process of removing URIs of replaceable content from the playlist and a process of generating a personalized playlist by inserting URIs of personalized advertising content.

In other words, the personalized playlist processor 120 removes the URIs of chunk-4.ts and chunk-5.ts from the playlist. Subsequently, the personalized playlist processor 120 generates a personalized playlist by inserting URIs of personalized advertising content into portions of the playlist from which the URIs of the replaceable content are removed. For example, as shown in FIG. 4, the personalized playlist processor 120 generates a personalized playlist by inserting the URIs of per-ad-1.ts and per-ad-2.ts in place of the URIs of chunk-4.ts and chunk-5.ts.

Meanwhile, the playlist may include a marker that represents replaceable content provision time information for providing replaceable content. A time identified by the replaceable content provision time information is substantially the same as a time in which personalized advertising content is provided. In other words, a time (duration) in which replaceable content is provided through the existing playlist is substantially the same as a time (duration) in which personalized advertising content is provided through the personalized playlist. Accordingly, even when replaceable content is replaced with personalized advertising content, the user of the user terminal 100 may naturally watch the content. The marker may include a marker complying with, for example, the Society of Cable Telecommunications Engineers (SCTE)-35 standard or a marker (referred to as a "digital queue tone signal" or "digital queue") implemented using another standard. For example, referring to FIG. 4, personalized advertising content, that is, per-ad-1.ts and per-ad-2.ts, may be provided in a time which is set to provide replaceable content, that is, chunk-4.ts and chunk-5.ts, due to the marker.

Next, a process of acquiring a URI of personalized advertising content inserted into a personalized playlist will be described in further detail.

FIG. 5 is a diagram exemplifying a process that the personalized playlist processor of the device for providing personalized advertisements according to the embodiment performs to acquire a URI of personalized advertising content.

Referring to FIG. 5, the personalized playlist processor 120 may additionally perform a process S130 of transmitting personalized information to the server 300 for providing advertising content and receiving a URI of personalized advertising content from the server 300.

The personalized information is a criterion for the server 300 to select personalized advertising content. The personalized information may include at least one selected from the group consisting of: user information including at least one of device identification information (i.e., identification information of the user terminal 100), device type information, sex, or age; user preference information; region information; content view history information; and purchase history information.

The device type information may include information such as a manufacturer, an operating system (OS), an OS version, a screen resolution of the user terminal 100 and a current state of an application installed on the user terminal. The user information may be input in advance by, for example, a user input. The user preference information may be generated on the basis of, for example, details set by the user of the user terminal 100. For example, the user preference information may be generated on the basis of details of a product search performed by the user through the user terminal 100. The region information may represent a region in which the user terminal 100 is located. For example, in the case of a mobile communication terminal, the region information may be generated on the basis of Global Positioning System (GPS) signals, and in the case of a receiver, a personal computing device, and a set-top box, the region information may be generated on the basis of subscriber information or network information. As an example, when the user terminal 100 is a mobile communication terminal, the region information may particularly include current location information. The content view history information may be generated on the basis of, for example, content watched by the user of the user terminal 100. The purchase history information may be generated on the basis of, for example, details of goods or services purchased by the user through the user terminal. In other words, the above-described information may be generated on the basis of the user's action irrelevant to watching content.

When the personalized information is received from the personalized playlist processor 120, the server 300 selects advertising content that is determined to be suited to the user of the user terminal 100 as personalized advertising content among a plurality of pieces of advertising content stored in advance. Subsequently, the server 300 transmits a URI of the personalized advertising content to the personalized playlist processor 120 through the communicator 110, and the personalized playlist processor 120 receives the URI of the personalized advertising content. Accordingly, the personalized playlist processor 120 acquires the URI of the personalized advertising content and then generates a personalized playlist through the process S120 as described above.

Referring back to FIG. 3, the device 100 for providing personalized advertisement according to the present embodiment may additionally include the personalized information storage 150. The personalized information storage 150 stores personalized information. The personalized information storage 150 may be implemented using a semiconductor device, such as a semiconductor memory.

Meanwhile, the process S130 may additionally include a process of reading the personalized information previously stored in the personalized information storage 150. In other words, the personalized playlist processor 120 may read the personalized information previously stored in the personalized information storage 150 and transmit the read personalized information to the server 300. It is more preferable for the personalized playlist processor 120 to read the personalized information previously stored in the personalized information storage 150 than to directly manage the personalized information.

The controller 140 may control the personalized information storage 150 to transmit the personalized information to the server 300. For example, when the personalized information stored in the personalized information storage 150 includes all of: the user information including at least one of the device identification information, the device type information, the sex, or the age; the user preference information; the region information; the content view history information; and the purchase history information, it is not preferable for the personalized playlist processor 120 to transmit all the above-described information to the server 300. In other words, the personalized playlist processor 120 may only transmit, for example, the device identification information to the server 300 as personalized information. However, the server 300 may require the above-described information to use the information as criteria for selecting personalized information. Accordingly, the controller 140 may control the personalized information storage 150 to transmit the personalized information stored in the personalized information storage 150 to the server 300 independently of the personalized playlist processor 120.

Meanwhile, the process S130 may additionally include a process of transmitting replaceable content provision time information which is extracted from the playlist to the server 300. In other words, the personalized playlist processor 120 may transmit the replaceable content provision time information to the server 300. On the basis of the replaceable content provision time information and the personalized information, the server 300 may select personalized advertising content to be provided through the user terminal 100 for a time (duration) identified through the replaceable content provision time information.

Next, a process in which the personalized playlist processor 120 generates internal URIs of a personalized playlist will be described in further detail.

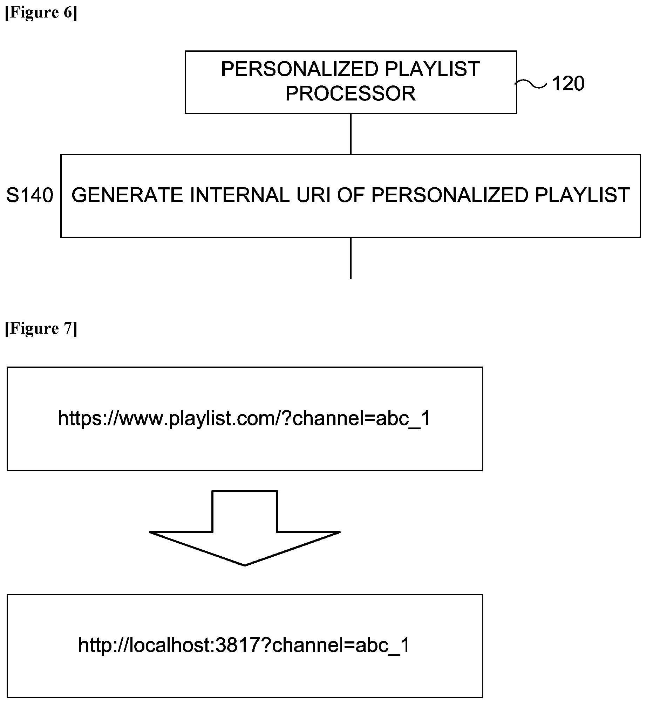

FIG. 6 is a diagram exemplifying a process in which the personalized playlist processor of the device for providing personalized advertisements according to the embodiment generates an internal URI of a personalized playlist, and FIG. 7 is a diagram schematically illustrating an example in which a calculation processor of the device for providing personalized advertisements according to the embodiment generates an internal URI of a personalized playlist.

Referring to FIGS. 6 and 7, the personalized playlist processor 120 may additionally perform a process S140 of generating an internal URI of the personalized playlist.

For example, it is assumed that a URI of a playlist for the channel "ABC-1" is "https://www.playlist.com/?channel=abc_1" as shown in FIG. 7. Also, it is assumed that player.prepare(URI) represents a function prepared for the user terminal 100 to receive a playlist.

For example, the user terminal 100, more specifically, the content processor 130, prepares to receive a playlist through player.prepare(https://www.playlist.com/?channel=abc_1). However, specifically, the content processor 130 provides content and personalized advertisements using a personalized playlist according to the present embodiment. Accordingly, the personalized playlist processor 120 generates the internal URI of the personalized playlist "http://localhost:3817?channel=abc_1" as shown in FIG. 7. Subsequently, the user terminal 100, that is, the content processor 130, prepares to receive a personalized playlist using a URI of the personalized playlist, that is, the internal URI player.prepare(http://localhost:3817?channel=abc_1) generated through the personalized playlist processor 120. Subsequently, the content processor 130 may receive content and a personalized advertisement using the internal URI of the personalized playlist, perform signal processing on the content and the personalized advertisement, and provide the content and the personalized advertisement. Therefore, according to the present embodiment, the user terminal 100 can provide a personalized advertisement to the user simply by changing a URI of a playlist for an internal URI of a personalized playlist without totally changing a configuration of the user terminal 100. In other words, according to the present embodiment, it is unnecessary to change an element installed on an existing user terminal (e.g., an element for processing content, such as a media player) to provide a personalized advertisement. Therefore, even in a real-time content streaming service, for example, an OTT service, it is possible to provide a personalized advertisement according to the present embodiment without changing an existing user terminal.

Meanwhile, the controller 140 may control operations of the personalized playlist processor 120. For example, the controller 140 may control operations of the personalized playlist processor 120 so that the personalized playlist processor 120 may perform the process S110 and the process S120 only when a predesignated condition is satisfied. Also, the controller 140 may control operations of the personalized playlist processor so that the personalized playlist processor 120 may perform the process S110 to the process S140 only when the predesignated condition is satisfied.

The predesignated condition may include one of: a first condition that the device 100 receives a user input event for selecting content; a second condition that the device 100 receives an instruction to generate a personalized playlist; and a third condition that the device 100 is set up with device information indicating that a personalized advertisement is to be provided.

The user input event may include, for example, a user input event of selecting content desired to be viewed from a plurality of pieces of content which are providable through the system 200. In other words, the user of the user terminal 100 selects content that she or he desires to watch through, for example, a user interface (not shown) displayed on a display (not shown) of the user terminal, and the system 200 provides the selected content accordingly. When the user input event is received, the controller 140 controls operations of the personalized playlist processor 120 so that the personalized playlist processor 120 may perform the process S110 and the process S120.

The controller 140 may generate the instruction to generate a personalized playlist. The controller 140 may generate the instruction to generate a personalized playlist, for example, at predesignated intervals. After generating the instruction to generate a personalized playlist, the controller 140 controls operations of the personalized playlist processor 120 so that the personalized playlist processor 120 may perform the process S110 and the process S120.

The controller 140 may generate the instruction to generate a personalized playlist on the basis of, for example, a state in which the content processor 130 receives a plurality of chunk files on the basis of a personalized playlist, a state in which the content processor 130 temporarily stores the received plurality of chunk files in a buffer (not shown) of the user terminal 100 to perform signal processing thereon, or a state in which the content processor 130 performs signal processing on the temporarily stored plurality of chunk files. Alternatively, the content processor 130 may generate the instruction to generate a personalized playlist.

For example, when there are some trouble in receiving chunk files, the number of chunk files temporarily stored in the buffer may not reach a predesignated reference, or a chunk file should be received in consideration of a signal processing rate, the controller 140 or the content processor 130 may generate the instruction to generate a personalized playlist. As described above, when the controller 140 and the content processor 130 are implemented using the same CPU, for example, the controller 140 may generate the instruction to generate a personalized playlist. On the other hand, when the controller 140 and the content processor 130 are implemented using separate elements, the content processor 130 may generate the instruction to generate a personalized playlist, and the controller 140 may receive the instruction to generate a personalized playlist. Even when the controller 140 and the content processor 130 are implemented using separate configurations, the controller 140 may generate the instruction to generate a personalized playlist.

The device information may be set up in advance through a user input or by a setting instruction transmitted from the system 200.

In other words, when the user of the user terminal 100 inputs a user input for consenting to receive personalized advertisements in advance through a user interface, which is displayed on the display of the user terminal 100, the user terminal 100 sets the device information on the basis of the user input and stores the device information. When the controller 140 has checked the device information for giving an instruction to provide a personalized advertisement, the controller 140 controls operations of the personalized playlist processor 120 so that the personalized playlist processor 120 may perform the process S110 and the process S120.

The setting instruction is transmitted from the system 200. In other words, the system 200 transmits the setting instruction indicating to provide a personalized advertisement to the user terminal 100, and the user terminal 100 sets up, on the basis of the setting instruction, the device information indicating that a personalized advertisement is to be provided, and stores the device information. When the controller 140 has checked the device information indicating that a personalized advertisement is to be provided, the controller 140 controls operations of the personalized playlist processor 120 so that the personalized playlist processor 120 may perform the process S110 and the process S120.

The setting instruction may be set, for example, depending on a channel or content providable by the system 200 or may include an instruction to provide a personalized advertisement only in a specific time. In other words, the setting instruction may be an instruction to provide a personalized advertisement according to specific conditions, such as a specific channel, specific content, and a specific time.

The setting instruction may be generated on the basis of the load of the system 200. For example, as described above, it is assumed that the system 200 includes a server for processing personalized advertisements and provides a personalized advertisement to the user terminal 100 using the server for processing personalized advertisements. When the processing power of the server for processing personalized advertisements is sufficient to provide a personalized advertisement to the user terminal 100, the system 200 provides a personalized advertisement to the user terminal 100 through the server for processing personalized advertisements. However, when the processing power of the server for processing personalized advertisements reaches its limit, it is difficult for the system 200 to provide a personalized advertisement to the user terminal 100 through the server for processing personalized advertisements. When the processing power of the server for processing personalized advertisements reaches its limit, the system 200 transmits the setting instruction to provide a personalized advertisement according to the present embodiment to the user terminal 100. When the controller 140 has checked the device information indicating that a personalized advertisement is to be provided, the controller 140 controls operations of the personalized playlist processor 120 so that the personalized playlist processor 120 may perform the process S110 and the process S120.

Referring back to FIG. 3, the device 100 for providing personalized advertisements according to the present disclosure may additionally include the execution information processor 160. The execution information processor 160 generates execution information for the personalized advertising content provided by the content processor 130 and transmits the execution information to a predesignated device. The execution information may include information such as identification information of the personalized advertising content, a provision time, and the identification information of the user terminal 100. The predesignated device may include, for example, the system 200 or the server 300. The system 200 or the server 300 may easily check details of providing the personalized advertising content on the basis of the execution information for the personalized advertising content. In particular, when a plurality of receivers access the system 200, the system 200 may easily check which advertisement has been provided to each of the receivers.

The execution information processor 160 may be implemented using a semiconductor device, such as the CPU. For example, the same CPU may operate as the personalized playlist processor 120, the content processor 130, the controller 140, and the execution information processor 160.

### [Modes of the Invention]

### <Other embodiments>

Although the embodiment of the technology set forth in the present disclosure has been described in detail, the embodiment is merely an exemplary description of the technology set forth in the present disclosure. Those of ordinary skill in the art to which the technology described in the present disclosure pertains could make various modifications without departing from the fundamental characteristics of the technology described in the present disclosure.

For example, detailed configurations, such as a format of a playlist, a format of a personalized playlist, and a format of a marker, can be variously modified without departing from the fundamental characteristics of the technology described in the present disclosure.

Therefore, the embodiments described in the present specification are intended to illustrate rather than limit the technology set forth in the present disclosure, and the spirit and scope of the technology set forth in the present disclosure are not limited by these embodiments. The scope of the technology set forth in the present disclosure should be interpreted as holding to the following claims, and it should be understood that any technology within a scope equivalent thereto should be construed as falling within the scope of the technology set forth in the present disclosure.

### [Industrial Applicability]

According to the technology set forth in the present disclosure, a device (i.e., a user terminal) that provides personalized advertisements while minimizing the load of a system that provides content through real-time streaming can provide a personalized advertisement to a user. Also, even when a system that provides content through streaming includes a server for processing personalized advertisements, a user terminal can dynamically change a playlist according to the load of the server for processing personalized advertisements. Accordingly, the user terminal can efficiently provide a personalized advertisement to a user even while minimizing the load of the system for providing content through streaming. In addition, even in a real-time content streaming service, such as an existing over-the-top (OTT) service, a user terminal can provide a personalized advertisement to a user according to the present embodiment simply by changing a uniform resource identifier (URI) of a playlist for an internal URI of a personalized playlist without changing an existing element installed on the user terminal, for example, an element for processing content, such as a media player.

### [Description of Reference Numerals]

- 100:: device for providing personalized advertisements (user terminal)
- 110:: communicator
- 120:: personalized playlist processor
- 130:: content processor
- 140:: controller
- 150:: personalized information storage
- 160:: execution information processor
- 200:: system for providing content through streaming
- 300:: server for providing advertising content

## Claims

1. A device for providing personalized advertisements, the device comprising:
a communicator;
a personalized playlist processor configured to perform: (a) receiving a playlist of content from a system for providing the content through streaming; and (b) generating a personalized playlist including a uniform resource identifier (URI) of personalized advertising content based on the playlist;
a content processor configured to receive the content and the personalized advertising content through the communicator using the personalized playlist, perform signal processing on the content and the personalized advertising content, and provide the content and the personalized advertising content; and
a controller configured to control operations of the communicator, the personalized playlist processor, and the content processor.

2. The device of claim 1, wherein the content is streamed in real time according to either one of a hypertext transfer protocol (HTTP) live streaming (HLS) standard and a Moving Picture Experts Group - Dynamic Adaptive Streaming over HTTP (MPEG-DASH) standard.

3. The device of claim 1, wherein the playlist includes a URI of necessary content and a URI of replaceable content, and
(b) comprises:
(b-1) removing the URI of the replaceable content from the playlist; and
(b-2) inserting the URI of the personalized advertising content into a portion of the playlist corresponding to the URI of the replaceable content to generate the personalized playlist.

4. The device of claim 3, wherein the playlist includes a marker which represents replaceable content provision time information for providing the replaceable content, and
a time in which the replaceable content is provided through the playlist is substantially same as a time in which the personalized advertising content is provided through the personalized playlist.

5. The device of claim 4, wherein the marker includes a marker complying with a Society of Cable Telecommunications Engineers (SCTE)-35 standard.

6. The device of claim 1, further comprising a personalized information storage configured to store personalized information including at least one selected from the group consisting of: user information, which includes at least one of device identification information, device type information, sex, or age; user preference information; region information; content view history information; and purchase history information,
wherein the controller is configured to control the personalized information storage to transmit the personalized information to a server for providing advertising content.

7. The device of claim 1, wherein the personalized playlist processor further performs: (c) transmitting personalized information including at least one selected from the group consisting of: user information, which includes at least one of device identification information, device type information, sex, or age; user preference information; region information; content view history information; and purchase history information to a server for providing advertising content and receiving the URI of the personalized advertising content from the server.

8. The device of claim 7, further comprising a personalized information storage configured to store the personalized information,
wherein (c) further comprises (c-1) reading the personalized information from the personalized information storage.

9. The device of claim 7, wherein the playlist includes a URI of necessary content and a URI of replaceable content, and
(c) further comprises (c-2) transmitting, to the server, replaceable content provision time information for providing the replaceable content extracted from the playlist.

10. The device of claim 1, wherein the personalized playlist processor further performs (d) generating an internal URI of the personalized playlist, and
the content processor receives the content and the personalized advertising content based on the internal URI of the personalized playlist, performs signal processing on the content and the personalized advertising content, and provides the content and the personalized advertising content.

11. The device of claim 1, wherein the controller controls operations of the personalized playlist processor so that the personalized playlist processor performs (a) and (b) only when a predesignated condition is satisfied.

12. The device of claim 11, wherein the condition is one selected from the group consisting of: a first condition that the device receives a user input event of selecting the content; a second condition that the device receives an instruction to generate a personalized playlist; and a third condition that the device is set up with device information indicating that a personalized advertisement is to be provided.

13. The device of claim 12, wherein the controller generates the instruction to generate the personalized playlist at predesignated intervals.

14. The device of claim 12, wherein the personalized playlist includes URIs of a plurality of chunk files, and
the controller generates the instruction to generate the personalized playlist based on a state in which the content processor receives the plurality of chunk files, a state in which the content processor temporarily stores the plurality of chunk files, or a state in which the content processor performs signal processing on the plurality of chunk files.

15. The device of claim 12, wherein the device information is preset through a user input or set up by a setting instruction transmitted from the system.

16. The device of claim 15, wherein the setting instruction is set up depending on a channel or content providable by the system.

17. The device of claim 15, wherein the setting instruction is generated based on a load of the system.

18. The device of claim 1, further comprising an execution information processor configured to generate execution information for the personalized advertising content provided by the content processor and transmit the execution information to a predesignated device.

19. The device of claim 18, wherein the predesignated device includes at least one of the system or a server for providing the personalized advertising content.
